# EUROPEAN PATENT APPLICATION

(11) **EP 1 586 232 A1**
(43) Date of publication of application: **19.10.2005**
(21) Application number: 05252236.4
(22) Date of filing: 09.04.2005
(51) Int. Cl.: A01D 34/54

(54) **Improvements in maintenance equipment**

(30) Priority: 13.04.2004 GB 0408148
(71) Applicant: Spearhead Machinery Ltd., Pershore, Worcestershire WR10 2DD (GB)
(72) Inventor: Lole, Christopher Martin, Spearhead Machinery Ltd., Pershore Worcestershire, WR10 2DD (GB)
(74) Representative: W.P. Thompson & Co.

(57) **Abstract**

A vegetation cutting head comprises a housing, a cutting rotor 4 supported for rotation within the housing and a ground roller 5 each end of which is supported on an arm 16. Each arm 16 is pivoted at a point coincident with the axis of the cutting rotor 4 and is displaceable between two or more pre-determined operating positions.

## Description

This invention is relevant to machinery used for the maintenance of vegetation such as grassed areas, road or river verges, banks and hedges. More specifically the present invention relates to a cutting head in which the cutter is cylindrical in form and rotates about an axis parallel to the ground. In such a cutting head a ground roller, adjustably attached to the frame of the cutting head, establishes the clearance between the ground and the line of cut.

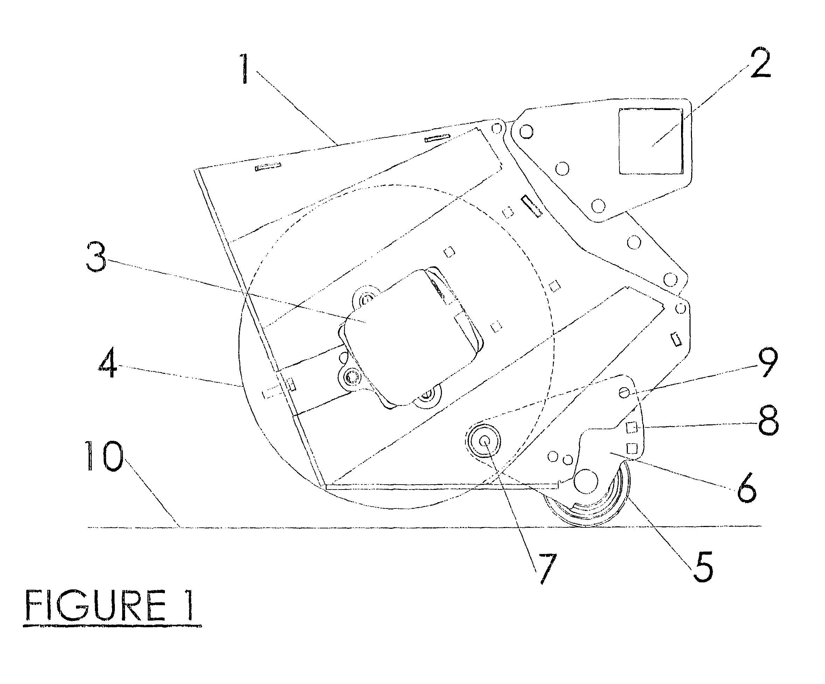

Figure 1 is an end view of a known cutting head 1 and illustrates a known scheme for positioning the ground roller 5 thereof. The framework of the cutting head 1 is held in the orientation shown by support of a bracket 2. A hydraulic motor 3 drives a cutting rotor 4, which is indicated in Figure 1 by a circle defining the periphery of the rotor 4.

The ground-contacting roller 5 is supported at each end in an arm 6, which is pivoted to the framework of the head 1 at a point 7, positioned low on the frame of the cutting head 1. The location of the roller 5 on its arc of possible movement about the pivot 7 is set by selecting one of holes 8 in the arm 6 for a locking bolt 9. The effect of this setting is to determine the spacing between the cutter 4 and the ground 10. That is, it determines the length of vegetation left after cutting.

Other known means of setting the position of the roller 5 resemble the example shown in Figure 1, and include arrangements in which plates corresponding to the arms 6 are bolted to the framework of the head 1 utilising slotted holes for adjustment. Certain operational disadvantages are common to all. Throughout the range of motion of the roller 5 along its line of possible travel, its clearance to the rotor 4 varies. When the roller 5 is set high, bringing the rotor 4 close to the ground 10, the roller 5 is at its closest to the rotor 4. In cutting heads intended to cope also with hedge cutting, a somewhat higher setting may be provided for the roller 5, where its clearance to the rotor 4 is a minimum value. Moving to the other height settings of the roller 5 its arc of motion carries it away from the rotor 4. Increased clearance can be troublesome if working in adverse ground conditions when mud tends to build up on the roller 5. Such accumulations can be troublesome, altering the cutting height by raising the cutting head 1. Another matter to be considered is that the effectiveness of the ground roller 5 in controlling cutting height on undulating ground is better the less the horizontal separation between the roller 5 and the lower limit of the cutting rotor 4. But in known systems of supporting and setting the ground roller 5 the highest position available for the roller 5 determines the maximum of this horizontal separation, and its reduction for lower settings is limited.

A further operational disadvantage with such means of setting the position of the roller 5 is that for re-adjustment the operator must stop the machine, dismount and work on the cutting head with tools. Operators sometimes bypass re-adjustment when changing from hedge cutting to verge trimming. Instead they use boom controls to support the cutting head 1 a little above the ground 10 as the head is traversed. Misjudgement may cause the cutting rotor 4 to strike the ground 10, stripping turf and overloading the cutting system and drive, and sometimes damaging the rotor 4. Attempts to deal with the readjustment difficulty by fitting powered actuators to the roller positioning system have been limited because of the size, disposition and clearances of the known mechanisms of roller support. Moreover, imperfect synchronisation of the two adjustment motions tends to result in jamming of the roller 5 in an oblique condition.

The cutter used for work on verges, banks, hedges and the like is mounted on a long jointed arm or boom extending from the tractor and is driven by a hydraulic motor. The boom must carry supply and return piping for the motor and for any other end-mounted hydraulic device from a pimping and storage system at the tractor. This requirement to install long extra pipelines with associated pressure control and other auxiliaries has inhibited possible efforts to overcome the mechanical difficulties of controlling the position of a ground roller, difficulties that are non-existent with manual setting.

It is an aim of the present invention to provide a cutting head comprising a cutting rotor with axis parallel to the ground in which the position of the ground roller is set by means that maintain constant clearance between the ground roller and the cutting rotor as height setting is altered. It is another object of the present invention to provide a cutting head having remotely operated means of setting the position of the ground roller.

According to the invention a vegetation cutting head comprising a cutting rotor with its axis parallel to the surface being cut is provided with a ground roller each end of which is supported on an arm pivoted at a point coincident with the axis of the cutting rotor, each said arm being displaceable between two or more pre-determined operating positions.

Each arm may be shifted between pre-determined operating positions and retained in either position by a displacement actuator.

The displacement actuator may be a hydraulic cylinder controlled from the tractor cab.

Hydraulic connections to the actuator may be made from the same supply as the hydraulic motor of the cutting rotor.

An embodiment of the present invention will now be described, by way of example, with reference to the accompanying drawings, in which:
Figure 1 has been discussed above, being a diagram of the characteristics of known means of setting the ground roller, showing an end view of a typical cutting head.
Figure 2 is a diagrammatic perspective view showing the underside of a cutting head according to the invention.
Figure 3 is a diagram of a control arrangement for the hydraulic actuators.

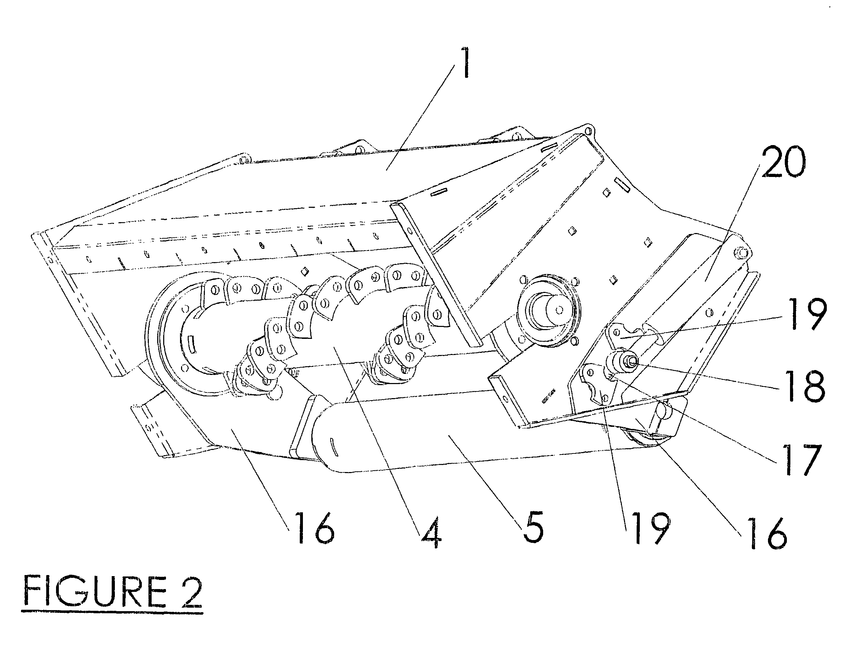

Referring to Figure 2 there is shown a cutting head 1 with a cutting rotor 4. In this example the cutting rotor is a flail cutter but for the sake of clarity, Figure 2 omits the flails and shows only the flail mountings. The rotor drive motor is not visible in this view.

The housing of the cutting head 1 has end panels that support the bearings of the rotor 4. On the inside of each end panel is an arm 16 which is pivotable at one end concentrically to the rotor bearing. The opposite end of each arm 16 carries a bearing and supports ground contact roller 5.

Each arm 16 has a lug 18 projecting through a slot 17 in the housing 1. Each slot 17 is aligned as a tangent to a circle centred on the axis of the rotor 4. A hydraulic cylinder 20 is arranged to push or pull the lug 18 along the slot 17, as required. Presettable stops 19 are provided to limit the movement of the lug 18. The effect of the hydraulic cylinder 20 pressing the lug 18 against either of the stops 19 is to position the roller 5 to either a high or a low position.

Because the arms 16 swivel about points coincident with the axis of the rotor 4 the clearance between the rotor 4 and the roller 5 is set to a close relationship, which does not vary with the position of the roller 5.

Although not shown in the Figures, some versions of the present example are fitted with means of adjusting the position of each roller bearing on its arm 16 to pre-set the radial clearance closely between the roller 5 and the cutting circle of the rotor 4.

At this consistent close relationship the periphery of the cutting rotor 4 prevents significant build-up of deposit on the ground roller 5 at all height settings. The machine has a self-cleaning action. Also, the constant radial clearance, set to a minimum, ensures that for each setting of the position of the roller 5 the horizontal distance between the roller 5 and the lowest point of the rotor 4 is a minimum. Consequently, on undulating ground, the control of cutting height is as effective as possible.

The length and situation of the arms 16 facilitate power-assisted positioning the roller 5, in this example by the hydraulic cylinders 20. In preparing the implement for a particular period of duty, the operator pre-sets the stops 19 to provide alternative settings of the roller 5. If the work consists of cutting ground vegetation a first pass can be required with the cutter set at topping height, and a second pass with the alternative stop set for trimming close to the ground. On other occasions there can be alternation between hedge and verge maintenance. One pair of stops 19 would then be set to raise the roller 5 clear for hedge cutting and, the other pair set to suit cutting the adjacent verge vegetation.

Changing the setting of roller 5 between the pre-set positions defined by each pair of stops 19 is effected from the cab by means suited to control the hydraulic supply to the hydraulic cylinders 20. It will, however, be understood that other forms of displacement actuator may be used with appropriate control means. In the case of a machine intended for frequent adaptation for hedge cutting, a single control element can be arranged to shift the roller 5 to the high position when the angling ram of the cutting head 1 is powered.

It will be apparent that the displacement actuators at each end of the roller 5 operate smoothly and are free of any propensity to jam when the actuators 20 are operated. The greater length, contact area, mass and frictional effect of the present components, compared to previously known examples, all contribute to the result we have found.

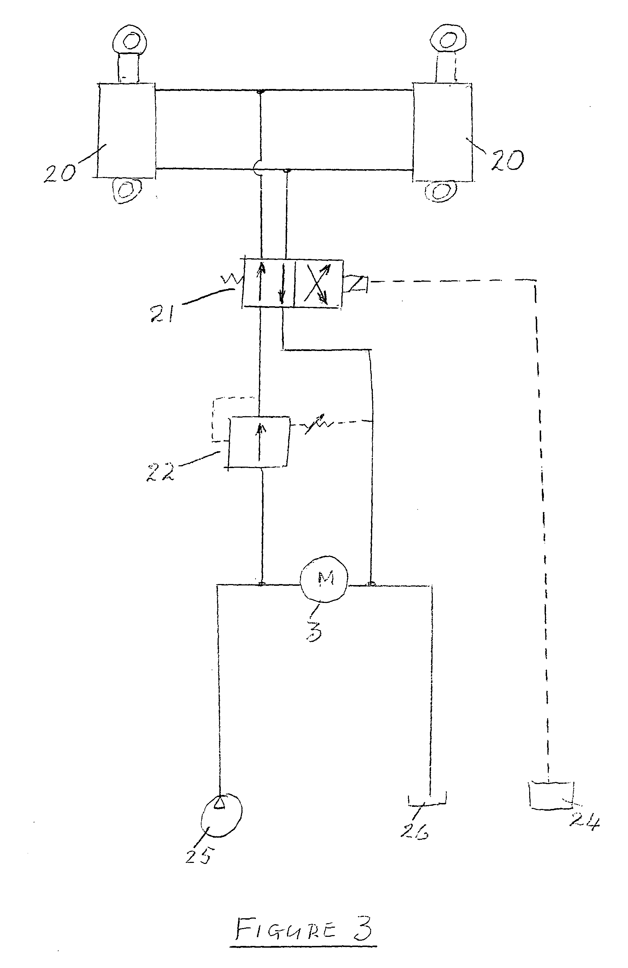

Figure 3 shows a hydraulic supply and control system for the cylinders 20.

Generally, hydraulic supply to auxiliary devices is taken from the tractor hydraulic system, which provided tappings for such purposes, but the hydraulic fluid supply of tractors can be contaminated, there is difficulty in maintaining a steady pressure in the absence of flow, and long runs of pipework have to be accommodated. The present example depends on the fact that the head 1 requires ground support from the roller 5 only when the cutting rotor 4 is working, that is, when the drive motor 3 is running. In Figure 3 side branches are made to the supply 25 and return 26 connections of the hydraulic motor 3. The branch from the supply connection 25 passes through a pressure-regulating valve 22, which limits the feed pressure to a value consistent with the motor supply pressure when the rotor 4 is running light. The pressure regulated feed and the return lines enter a changeover valve 21 located on the housing 1. From the changeover valve 21 the branch lines fork and pass to the cylinders 20. The changeover valve 21 is electrically operated from a switched supply 24. Depending on the main duty intended for the machine the switched supply 24 may be one already present for another purpose, such as powering the angling ram, or it may be operator controlled.

In the present example the hydraulic pressure at the inlet of the motor 3 of the rotor 4 varies between fifty bar when running light and two hundred and ten bar when fully engaged in cutting. The pressure-reducing valve 22 is set to an output pressure of fifty bar, and the cylinders 20 are designed to operate at this pressure. This arrangement provides effective control of the implement in all working circumstances.

It will be appreciated that the arrangement illustrated in Figure 3 and described above is adaptable to boom-mounted cutting heads fitted with other mechanisms for setting the position of a ground roller. The connection of branch feed and return pipes close to the hydraulic connections to the rotor drive motor overcomes the difficulty, cost and inconvenience of laying long runs of pipework along the boom.

## Claims

1. A vegetation cutting head comprises a housing, a cutting rotor 4 supported for rotation within the housing and a ground roller 5 each end of which is supported on an arm 16, **characterised in that** each arm 16 is pivoted at a point coincident with the axis of the cutting rotor 4 and is displaceable between two or more pre-determined operating positions.

2. A vegetation cutting head according to claim 1, wherein each arm 16 can be shifted between pre-determined operating positions and retained in position by a displacement actuator.

3. A vegetation cutting head according to claim 2, wherein the displacement actuator is a hydraulic cylinder.

4. A vegetation cutting head according to claim 3, wherein the cutting rotor is driven by an hydraulic motor and wherein hydraulic connections to the actuator are from the same supply as the hydraulic motor of the cutting rotor.
